# EUROPÄISCHE PATENTSCHRIFT

(11) **EP 2 186 551 B1**
(45) Veröffentlichungstag und Bekanntmachung des Hinweises auf die Patenterteilung: **27.04.2011**
(21) Anmeldenummer: 09174233.8
(22) Anmeldetag: 27.10.2009
(51) Int. Cl.: A63B 29/02, A62B 35/04, D07B 1/18

(54) **Gespleisstes Seilende**
Spliced end of a rope
Extrémité de corde épissée

(30) Priorität: 12.11.2008 AT 17562008
(43) Veröffentlichungstag der Anmeldung: 19.05.2010
(73) Patentinhaber: Teufelberger Gesellschaft M.B.H., 4602 Wels (AT)
(72) Erfinder: Trauner, Egon, A-4600, Wels (AT)
(74) Vertreter: Nemec, Harald

(56) Entgegenhaltungen:
- WO-A1-2008/069380
- DE-U1- 8 606 807
- GB-A- 1 480 826
- US-A- 3 102 715
- US-A- 5 205 803
- US-A- 5 472 155

## Beschreibung

Die vorliegende Erfindung betrifft ein Seilende, welches unter Bildung einer Schlinge gespleißt ist.

In verschiedenen Gebieten der Technik, so z.B. im Bereich von Yachttauwerken oder im Bereich der Personensicherung oder Kletterei werden Seilenden benötigt, welche in Form einer Schlinge bzw. eines Auges ausgestaltet sind. Dabei muss das Seilende so fixiert sein, dass die im jeweiligen Anwendungsbereich auftretenden Zugkräfte aufgenommen werden können, ohne dass sich die Schlinge löst.

Es sind zwei grundsätzliche Methoden zur Bildung einer Schlinge im Bereich des Seilendes bekannt:
In der ersten Methode wird das Seilendstück zur Bildung einer Schlinge zurückgeschlagen, über eine gewisse Strecke an den zur Schlinge führenden Seilabschnitt angelegt und mit diesem, z.B. über eine Vernähung fixiert. Ein entsprechendes System ist beispielsweise aus der EP 0 768 100 B1 bekannt.

Diese Systeme können mittels Maschinen gefertigt werden, wodurch eine geringe Fehleranfälligkeit resultiert. Aufgrund des abrupten Überganges vom Seil zur Schlinge ergibt sich einerseits ein nicht ansprechender optischer Eindruck und andererseits besteht auch die Gefahr, dass sich das Seilende bzw. die Schlinge aufgrund dieses Überganges an Hindernissen, z.B. an einem Ast verhängen kann. Dieser Übergang kann durch ein Abschrägen des Seilendes zwar abgeschwächt, aber nicht vollständig vermieden werden.

Alternativ dazu ist es seit langem bekannt, das Seilende zu verspleißen, d.h. das zurückgeschlagene Seilendstück in den zur Schlinge führenden Seilabschnitt einzuführen und über eine gewisse Strecke in dem Seilabschnitt zu führen.

Bei Zugbelastung klemmt sich das verspleißte Seilendstück innerhalb des Seilabschnittes fest, sodass sich die Schlinge nicht löst. Dazu ist es aber notwendig, das Seilendstück über eine relativ lange Strecke (im folgenden: "Spleißlänge" genannt) innerhalb des zur Schlinge führenden Seilabschnittes zu führen. Ein solcherart gefertigter Spleiß weist keinen abrupten Übergang auf, sondern verläuft in einer gleichförmigen Verjüngung von der Schlinge bzw. dem Auge zum Seil.

Ein solcherart verspleißtes Seilende kann nur von Hand gefertigt werden, was allerdings mit einer gewissen Fehlergefahr verbunden ist. Gerade bei Anwendungen, wo der Sicherheitsaspekt eine große Rolle spielt, muss jeder Spleiß eine gleich hohe Bruchlast aufweisen. Durch den starken Einfluss der Geschicklichkeit der den Spleiß herstellenden Person auf die Qualität des Spleißes ist dies nur ungenügend gewährleistet.

Die vorliegende Erfindung stellt sich zur Aufgabe, ein verspleißtes Seilende zur Verfügung zu stellen, welches die zuvor genannten Nachteile der bekannten Methoden des Standes der Technik nicht aufweist und insbesondere ausreichende und reproduzierbare Stabilität gegenüber Zugbeanspruchung bei gleichzeitig einfacher, formschöner und stufenloser Ausbildung aufweist.

Diese Aufgabe wird mit einem unter Bildung einer Schlinge gespleißten Seilende gelöst, welches ein zur Bildung der Schlinge zurückgeschlagenes Seilendstück und einen zur Schlinge führenden Seilabschnitt enthält, wobei ein Spleißbereich vorgesehen ist, in welchem das Seilendstück innerhalb des Seilabschnittes geführt ist, und welches dadurch gekennzeichnet ist, dass der Spleißbereich von der Schlinge durch einen Vernähungsbereich beabstandet ist, in welchem das Seilendstück und der Seilabschnitt aneinanderliegen und durch eine lasttragende Vernähung miteinander vernäht sind.

Bevorzugt ist zumindest in einem Teil des Spleißbereiches ebenfalls eine lasttragende Vernähung vorgesehen, durch welche das Seilendstück und der Seilabschnitt miteinander vernäht sind.

### Kurze Beschreibung der Figur:

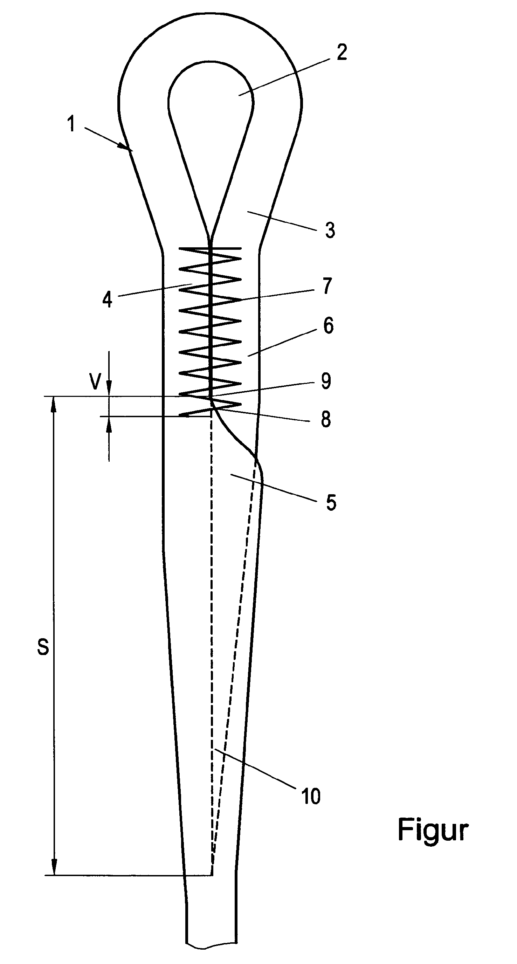

Figur 1 zeigt schematisch den Aufbau eines erfindungsgemäßen Seilendes.

### Detaillierte Beschreibung der Erfindung:

Für die Zwecke der vorliegenden Erfindung sind unter dem Begriff "ein Spleißbereich, in welchem das Seilendstück innerhalb des Seilabschnittes geführt ist" sämtliche bekannten Methoden zu verstehen, mittels welchen zur Bildung eines Augspleißes das Seilendstück in den zum Auge bzw. zur Schlinge führenden Seilabschnitt zurückgeführt und in diesen Seilabschnitt eingeführt wird.

Diese Methoden unterscheiden sich naturgemäß je nach Aufbau des verwendeten Seiles: Bei einem Hohlgeflecht beispielsweise wird das Seilendstück zurückgeführt, an einem gewissen Punkt mittels Einstich in das Innere des zur Schlinge führenden Seilabschnittes eingeführt und über eine gewisse Strecke im Inneren dieses Abschnittes geführt. Auch Spleißausführungen mit mehrfachen Durchstichen des zurückgeführten Seilendstückes durch den zur Schlinge führenden Seilabschnitt sind bekannt.

Bei gedrehten Seilen können zur Bildung des Spleißes die einzelnen Litzen des zurückgeschlagenen Seilendstückes aufgetrennt und über eine gewisse Strecke abwechselnd durch die Litzen des zur Schlinge führenden Seilabschnittes geführt werden.

Diese und weitere, vom jeweiligen Aufbau des Seiles abhängigen Methoden, sind dem Fachmann an sich bekannt, siehe z.B. das von der Firma Gleistein Ropes veröffentlichte "Spleißbuch" oder die von der Anmelderin in ihrem Katalog über Yachttauwerk beschriebenen Spleißanleitungen:
http://www.teufelberger.org/uploads/tx_txconceptadownloads/Yachttauwerk_2009_de.pdf

Die vorliegende Erfindung beruht auf einer Kombination der an sich bekannten Methoden einer Vernähung des Seilendstückes mit dem zur Schlinge führenden Seilabschnitt einerseits und einer Spleißbildung durch Zurückführen des Seilendstückes in den zur Schlinge führenden Seilabschnitt andererseits. Dadurch wird eine gegenüber Zugbelastung stabile, formschöne und in wenig aufwendiger Art und Weise herstellbare Verbindung erreicht.

Durch die erfindungsgemäße Kombination von Maßnahmen muss der Spleißbereich in der erfindungsgemäßen Anordnung nicht alleine in der Lage sein, auftretende Zugbelastungen aufzunehmen, sondern kann viel kürzer gehalten werden als bei bekannten Verfahren des Standes der Technik.

Insbesondere kann durch die erfindungsgemäß mögliche Verkürzung des Spleißbereiches auch der zeitliche Aufwand zur Herstellung des Spleißes deutlich verkürzt werden. Zudem muss die Qualität des Spleißes nicht so hohen Anforderungen genügen. Mehrfache Durchstiche, die den Spleiß sichern sollen, können ebenfalls entfallen.

Bevorzugt ist erfindungsgemäß in zumindest einem Teil des Spleißbereiches ebenfalls eine lasttragende Vernähung vorgesehen.

Für die Zwecke der vorliegenden Erfindung bedeutet der Begriff "lasttragende Vernähung", dass die Vernähung gegenüber den bei Benutzung des jeweiligen Seiles auftretenden Zugbelastungen stabil ist, d.h. sich nicht löst oder reisst. Insbesondere ist eine lasttragende Vernähung im Sinne der vorliegenden Erfindung in der Lage, mindestens 50% der Mindestbruchlast des Seiles in der freien Länge (also ohne das erfindungsgemäße Seilende) zu übernehmen, bevorzugt mindestens 80% dieser Mindestbruchlast. Das Herstellen solcher lasttragenden Vernähungen ist dem Fachmann an sich bekannt, siehe z.B. die EP 0 768 100 B1.

Bevorzugt sind die Vernähung im Vernähungsbereich und die Vernähung im Spleißbereich als eine einzige durchgehende Vernähung ausgestaltet.

Alternativ dazu kann es sich auch um voneinander getrennte Vernähungen handeln. Sowohl im Vernähungsbereich als auch im Spleißbereich können mehrere, voneinander getrennte oder auch miteinander verbundene Vernähungen vorgesehen sein.

In einer weiteren bevorzugten Ausführungsform beträgt die Länge V der Vernähung im Spleißbereich (oder gegebenenfalls, wenn mehrere Vernähungen vorgesehen sind, die Summe aller Längen der Vernähungen) 50% oder weniger, bevorzugt 20% oder weniger, insbesondere bevorzugt 10% oder weniger der gesamten Länge S des Spleißbereiches.

Es ist somit erfindungsgemäß nur erforderlich, in einem relativ kurzen Abschnitt des Spleißbereiches eine Vernähung vorzusehen. Bevorzugt ist die Vernähung, von der Schlinge aus betrachtet, am Beginn des Spleißbereiches vorgesehen.

In einer weiteren bevorzugten Ausführungsform beträgt das Verhältnis der Länge S des Spleißbereiches zum Durchmesser D des Seiles 15:1 oder weniger, bevorzugt 12:1 oder weniger, besonders bevorzugt 10:1 oder weniger. Dies ist ein wesentlicher Unterschied zu an sich bekannten Verspleißungen von Seilen, bei welchen der Spleißbereich eine wesentlich größere Länge aufweisen muss, siehe z.B. den Entwurf prEN 354 zur Europäischen Norm 354:2008 hinsichtlich persönlicher Schutzausrüstung gegen Absturz - Verbindungsmittel.

Zur Definition der Länge S des Spleißbereiches wird für die Zwecke der vorliegenden Erfindung festgelegt, dass als Spleißbereich der Bereich von jenem von der Schlinge aus gesehen ersten Punkt, an welchem das zurückgeführte Seilende den in die Schlinge führenden Abschnitt berührt und in diesen eintritt, bis hin zum Ende des Endstückes angesehen wird. Im Fall von gedrehten Seilen beginnt der Spleißbereich definitionsgemäß mit dem von der Schlinge aus gesehen ersten Punkt, an welchem eine der aufgedrehten Litzen des zurückgeführten Seilendes eine Litze des zur Schlinge führenden Abschnittes berührt und um diese gedreht wird. Sinngemäß ist der Spleißbereich für andere Arten von Seilen zu definieren.

Bevorzugt ist die Vernähung bzw. sind die Vernähungen im Vernähung- und im Spleißbereich maschinell gefertigt.

Das Material für die Vernähung kann beliebig ausgewählt werden; bevorzugt sind Nähte aus Polyethylenterephtalat (PET) oder Polyamid (PA).

In an sich bekannter Weise kann das Seilendstück zumindest in einem Teil des Spleißbereiches verjüngt sein. In diesem Fall ist das Seilendstück bevorzugt in jenem Bereich des Spleißbereiches, in welchem die Vernähung vorgesehen ist, nicht verjüngt. Wie bereits erwähnt, ist die Vernähung bevorzugt, von der Schlinge aus gesehen, am Beginn des Spleißbereiches vorgesehen.

Zur Herstellung des erfindungsgemäßen Seilendes kann ein Seil beliebigen Aufbaus herangezogen werden. Insbesondere kann es sich um das Ende eines Seiles ausgewählt aus der Gruppe bestehend aus geflochtenen Seilen, gedrehten Seilen, Hohlseilen, und Seilen mit einem oder mehreren Kernen handeln. Wie bereits erwähnt, ist die Methode des Verspleißens vom Aufbau des Seiles abhängig und sind dem Fachmann entsprechende Methoden geläufig.

Das Seil kann ein beliebiges Fasermaterial, insbesondere ein Material ausgewählt aus der Gruppe bestehend aus Polyamid, Polyester, Polypropylen, Hochmodul-Polyethylen (Dyneema®), Aramid (z.B. Kevlar®, Twaron® etc.), Flüssigkristallin-Copolyester (LC-PES, z.B. Vectran®) und Polybenzoxazol (PBO), enthalten. Selbstverständlich können innerhalb des Seiles auch verschiedene Materialien bzw. Fasermischungen eingesetzt werden.

In einem weiteren Aspekt der vorliegenden Erfindung wird ein unter Bildung einer Schlinge gespleißtes Seilende zur Verfügung gestellt, welches ein zur Bildung der Schlinge zurückgeschlagenes Seilendstück und einen zur Schlinge führenden Seilabschnitt enthält, wobei unmittelbar an die Schlinge anliegend ein Spleißbereich vorgesehen ist, in welchem das Seilendstück innerhalb des Seilabschnittes geführt ist, und welches dadurch gekennzeichnet ist, dass zumindest in einem Teil des Spleißbereiches ebenfalls eine lasttragende Vernähung vorgesehen ist.

In dieser Ausführungsform ist somit der Spleißbereich nicht durch einen Vernähungsbereich von der Schlinge beabstandet. Durch die lasttragende Vernähung zumindest eines Teiles des Spleißbereiches kann dieser aber wiederum kürzer gehalten werden als im Stand der Technik, ohne dass die Mindestbelastbarkeit des Seilendes unzureichend wird.

Die oben angegebenen Verhältnisse für die Längen V der Vernähung im Spleißbereich gegenüber der Länge S des Spleißbereiches bzw. der Länge S des Spleißbereiches gegenüber dem Durchmesser D des Seiles gelten auch für diese Ausführungsform.

Auch sämtliche weiter oben angeführten bevorzugten Varianten sowie die bereits genannten verschiedenen Arten von Seilen bzw. Materialien können in dieser alternativen Ausführungsform verwendet werden.

Insbesondere kann auch in dieser alternativen Ausführungsform das Seilendstück im Spleißbereich zumindest in einem Teil des Spleißbereiches verjüngt sein. In diesem Fall ist das Seilendstück bevorzugt in jenem Bereich des Spleißbereiches, in welchem die Vernähung vorgesehen ist, nicht verjüngt. Die Vernähung ist bevorzugt, von der Schlinge aus gesehen, am Beginn des Spleißbereiches vorgesehen.

### Detaillierte Beschreibung der Figur

Bei dem in der Figur dargestellten Seilende 1 ist durch das Zurückschlagen des Seilendstückes 3 eine Schlinge 2 gebildet. Das Seilendstück 3 wird in bekannter Weise mit dem zur Schlinge 2 führenden Seilabschnitt 4 verspleißt, indem es in den Seilabschnitt 4 eingeführt wird und über einen gewissen Bereich innerhalb des Seilabschnittes verläuft. Der Bereich zwischen dem von der Schlinge aus gesehen ersten Punkt 9, an welchem das Endstück den Seilabschnitt 4 berührt und in diesen (z.B. in Form eines Einstiches) eintritt, bis zum Ende des Endstückes 3 wird als Spleißbereich 5 bezeichnet.

Der Eintrittspunkt 9 ist aber im Unterschied zum Stand der Technik von der Schlinge 2 beabstandet. Im Bereich zwischen Schlinge 2 und Eintrittspunkt 9 ist ein Vernähungsbereich 6 vorgesehen, in welchem das Seilendstück 3 und der zur Schlinge führende Abschnitt 4 nebeneinander liegen und durch eine im vorliegenden Beispiel durchgehende Vernähung 7 miteinander lasttragend vernäht sind. Zusätzlich ist auch über einen gewissen Abschnitt des Spleißbereiches 5 eine Vernähung 8 vorgesehen. Im vorliegenden Beispiel sind die Vernähungen 7 und 8 als eine durchgehende Vernähung ausgestaltet.

Das Endstück 3 ist im Spleißbereich 5 in Richtung zum Ende hin verjüngt, was durch Bezugsziffer 10 dargestellt wird. Im Bereich der Vernähung 8 ist das Endstück 3 vorzugsweise nicht verjüngt.

Ebenfalls in der Figur schematisch dargestellt sind die Länge S des Spleißbereiches 5 und die Länge V der im Spleißbereich bevorzugt vorgesehenen Vernähung 8.

### Beispiel

Zur Herstellung eines erfindungsgemäßen Seilendes wurde ein Seil aus PES mit einem Kern-Mantel-Geflecht, bestehend aus einem geflochtenen PES-Kern (16-flechtig) und einem geflochtenen PES-Mantel (32-flechtig) herangezogen.

Der Seil-Durchmesser betrug 12,1mm.

Das Seilendstück wurde zur Bildung einer Schlinge zurückgeschlagen und in einem gewissen Abstand von der Schlinge in an sich bekannter Weise in den zur Schlinge führenden Abschnitt eingeführt (verspleißt). Es wurde eine durchgehende lasttragende Vernähung in dem von der Schlinge zum Spleißbereich führenden Abschnitt sowie über eine gewisse Länge des Spleißbereiches angebracht.

Gemäß Figur 1 ergaben sich folgende Dimensionen des fertigen Seilendes:

| | |
|---|---|
| Länge von Naht (7)+(8) (Durchgehend): | 42 mm |
| Länge von Naht (7): | 37 mm |
| Länge von Naht (8): | 5 mm |
| Länge des Spleißbereich (5): | 120 mm |

Daraus ergeben sich folgende Verhältniszahlen:
Anteil der Länge V der Vernähung (8) an der Länge S des Spleißbereiches (5): 4,2% Verhältnis der Länge S des Spleißbereiches (5) zum Durchmesser D des Seiles = 120 : 12,1 = 9,9 : 1

Die Mindestbruchlast (MBL) des Seiles in freier Länge betrug 39,0 kN

Die MBL des Seiles mit der erfindungsgemäßen Endverbindung betrug 34,6 kN und ist damit gegenüber der MBL des Seiles in freier Länge nur unwesentlich geringer.

## Patentansprüche

1. Unter Bildung einer Schlinge (2) gespleißtes Seilende (1), enthaltend ein zur Bildung der Schlinge (2) zurückgeschlagenes Seilendstück (3) und einen zur Schlinge führenden Seilabschnitt (4), wobei ein Spleißbereich (5) vorgesehen ist, in welchem das Seilendstück (3) innerhalb des Seilabschnittes (4) geführt ist, **dadurch gekennzeichnet, dass** der Spleißbereich (5) von der Schlinge (2) durch einen Vernähungsbereich (6) beabstandet ist, in welchem das Seilendstück (3) und der Seilabschnitt (4) aneinanderliegen und durch eine lasttragende Vernähung (7) miteinander vernäht sind.

2. Seilende gemäß Anspruch 1, **dadurch gekennzeichnet, dass** zumindest in einem Teil des Spleißbereiches (5) ebenfalls eine lasttragende Vernähung (8) vorgesehen ist, durch welche das Seilendstück (3) und der Seilabschnitt (4) miteinander vernäht sind.

3. Seilende gemäß Anspruch 2, **dadurch gekennzeichnet, dass** die Vernähung (7) im Vernähungsbereich (6) und die Vernähung (8) im Spleißbereich (5) als eine durchgehende Vernähung ausgestaltet sind.

4. Seilende gemäß Anspruch 2 oder 3, **dadurch gekennzeichnet, dass** die Länge (V) der Vernähung (8) im Spleißbereich (5) 50% oder weniger, bevorzugt 20% oder weniger, insbesondere bevorzugt 10% oder weniger der gesamten Länge (S) des Spleißbereiches (5) beträgt.

5. Seilende gemäß einem der vorhergehenden Ansprüche, **dadurch gekennzeichnet, dass** das Verhältnis der Länge (S) des Spleißbereiches (5) zum Durchmesser (D) des Seiles 15:1 oder weniger, bevorzugt 12:1 oder weniger, besonders bevorzugt 10:1 oder weniger beträgt.

6. Seilende gemäß einem der vorhergehenden Ansprüche, **dadurch gekennzeichnet, dass** die Vernähung bzw. die Vernähungen (7,8) maschinell gefertigt ist/sind.

7. Seilende gemäß einem der vorhergehenden Ansprüche, **dadurch gekennzeichnet, dass** das Seilendstück (3) zumindest in einem Teil des Spleißbereiches (5) verjüngt ist (10).

8. Seilende gemäß Anspruch 7, **dadurch gekennzeichnet, dass** das Seilendstück (3) in jenem Bereich des Spleißbereiches (5), in welchem die Vernähung (8) vorgesehen ist, nicht verjüngt ist.

9. Seilende gemäß einem der vorhergehenden Ansprüche, **dadurch gekennzeichnet, dass** es sich um das Ende eines Seiles ausgewählt aus der Gruppe bestehend aus geflochtenen Seilen, gedrehten Seilen, Hohlseilen, und Seilen mit einem oder mehreren Kernen handelt.

10. Seilende gemäß einem der vorherigen Ansprüche, **dadurch gekennzeichnet, dass** das Seil ein Fasermaterial ausgewählt aus der Gruppe bestehend aus Polyamid, Polyester, Polypropylen, Hochmodul-Polyethylen, Aramid, Flüssigkristallin-Copolyester und Polybenzoxazol enthält.

## Claims

1. A rope end (1) spliced by forming a loop (2), containing a rope end section (3) that is folded back to form the loop (2) and a rope section (4) leading to the loop, wherein there is provided a spliced area (5), in which the rope end section (4) is guided within the rope section (4), **characterized in that** the spliced area (5) is spaced apart from the loop (2) by a sewing area (6), in which the rope end section (3) and the rope section (4) are situated adjacent to each other and sewn to each other by means of a load-bearing sewing (7).

2. A rope end according to claim 1, **characterized in that** there is provided at least in a part of the spliced area (5) also a load-bearing sewing (8), by means of which the rope end section (3) and the rope section (4) are sewn to each other.

3. A rope end according to claim 2, **characterized in that** the sewing (7) in the sewing area (6) and the sewing (8) in the spliced area (5) are formed as a continuous sewing.

4. A rope end according to claim 2 or 3, **characterized in that** the length (V) of the sewing (8) in the spliced area (5) is 50% or less, preferably 20% or less, particularly preferably 10% or less of the entire length (S) of the spliced area (5).

5. A rope end according to any of the preceding claims, **characterized in that** the ratio of the length (S) of the spliced area (5) to the diameter (D) or the rope is 15:1, preferably 12:1, particularly preferably 10:1 or less.

6. A rope end according to any of the preceding claims, **characterized in that** the sewing or the sewings (7, 8), respectively, is / are machine-made.

7. A rope end according to any of the preceding claims, **characterized in that** the rope end section (3) is tapered (10) at least in a part of the spliced area (5).

8. A rope end according to claim 7, **characterized in that** the rope end section (3) is not tapered in the area of the spliced area (5), in which there is provided the sewing (8).

9. A rope end according to any of the preceding claims, **characterized in that** it is the end of a rope selected from the group consisting of braided ropes, twisted ropes, hollow ropes and ropes with one or several cores.

10. A rope end according to any of the preceding claims, **characterized in that** the rope contains a fibre material selected from the group consisting of polyamide, polyester, polypropylene, high-module polyethylene, aramide, liquid-crystalline co-polyester and polybenzoxazol.

## Revendications

1. Extrémité (1) de câble épissée pour former une boucle (2) et contenant une pièce d'extrémité (3) de câble rabattue pour former la boucle (2) et un tronçon (4) de câble qui conduit à la boucle, une zone d'épissure (5) dans laquelle la pièce d'extrémité (3) du câble est passée à l'intérieur du tronçon (4) du câble étant prévue,
**caractérisée en ce que**
la zone d'épissure (5) est maintenue à distance de la boucle (2) par une zone de couture (6) dans laquelle la pièce d'extrémité (3) du câble et le tronçon (4) du câble reposent l'une contre l'autre et sont cousus l'une à l'autre par une couture (7) reprenant les charges.

2. Extrémité de câble selon la revendication 1, **caractérisée en ce qu'**une couture (8) reprenant les charges par laquelle la pièce d'extrémité (3) du câble et le tronçon (4) du câble sont cousus l'une à l'autre est également prévue dans au moins une partie de la zone d'épissure (5).

3. Extrémité de câble selon la revendication 2, **caractérisée en ce que** la couture (7) prévue dans la zone de couture (6) et la couture (8) prévue dans la zone d'épissure (5) sont configurées comme unique couture continue.

4. Extrémité de câble selon les revendications 2 ou 3, **caractérisée en ce que** la longueur (V) de la couture (8) dans la zone d'épissure (5) représente 50 % ou moins, de préférence 20 % ou moins et de manière particulièrement préférable 10 % ou moins de la longueur totale (S) de la zone d'épissure (5).

5. Extrémité de câble selon l'une des revendications précédentes, **caractérisée en ce que** le rapport entre la longueur (S) de la zone d'épissure (5) et le diamètre (2) du câble est de 15:1 ou moins, de préférence de 12:1 ou moins et de manière particulièrement préférable de 10:1 ou moins.

6. Extrémité de câble selon l'une des revendications précédentes, **caractérisée en ce que** la couture ou les coutures (7, 8) sont réalisées à la machine.

7. Extrémité de câble selon l'une des revendications précédentes, **caractérisée en ce que** la pièce d'extrémité (3) du câble présente un rétrécissement (10) dans au moins une partie de la zone d'épissure (5).

8. Extrémité de câble selon l'une des revendications précédentes, **caractérisée** selon la revendication 7, **caractérisée en ce que** la pièce d'extrémité (3) du câble n'est pas rétrécie dans la partie de la zone d'épissure (5) dans laquelle la couture (8) est prévue.

9. Extrémité de câble selon l'une des revendications précédentes, **caractérisée en ce qu'**il s'agit de l'extrémité d'un câble sélectionné dans l'ensemble constitué des câbles tressés, des câbles torsadés, des câbles creux et des câbles présentant une ou plusieurs âmes.

10. Extrémité de câble selon l'une des revendications précédentes, **caractérisée en ce que** le câble contient un matériau en fibres sélectionné dans l'ensemble constitué du polyamide, du polyester, du polypropylène, du polyéthylène à haut module, de l'aramide, des copolyesters à cristaux liquides et du polybenzoxazole.
